# EUROPÄISCHE PATENTANMELDUNG

(11) **EP 2 927 625 A1**
(43) Veröffentlichungstag der Anmeldung: **07.10.2015**
(21) Anmeldenummer: 14162916.2
(22) Anmeldetag: 31.03.2014
(51) Int. Cl.: F25D 13/06, G01N 35/02, G01N 35/00, G01N 35/04

(54) **Probenverteilungssystem und Laborautomatisierungssystem**

(71) Anmelder: Roche Diagnostics GmbH, 68305 Mannheim (DE); F. Hoffmann-La Roche AG, 4070 Basel (CH)
(72) Erfinder: Riether, Christian, 71397 Leutenbach (DE)
(74) Vertreter: Patentanwälte Ruff, Wilhelm, Beier, Dauster & Partner

(57) **Zusammenfassung**

Die Erfindung betrifft ein Probenverteilungssystem mit einer Transportfläche, auf welcher Probenträger bewegbar sind. Das Probenverteilungssystem weist Umgebungsbedingungsbeeinflussungsmittel auf, um Umgebungsbedingungen über einem Teilbereich der Transportfläche so zu beeinflussen, dass Proben dort eine bestimmte Zeit lang ohne Beeinträchtigung aufbewahrt werden können.

## Beschreibung

### Anwendungsgebiet und Stand der Technik

Die Erfindung betrifft ein Probenverteilungssystem und ein Laborautomatisierungssystem.

Die WO 2013/064656 A1 zeigt ein Probenverteilungssystem mit einer Anzahl von Probenträgern, die jeweils ein magnetisches Element aufweisen. Die Probenträger sind dazu ausgebildet, einen Probenbehälter, beispielsweise in Form eines Probenröhrchens, aufzunehmen. In den Probenbehältern sind zu analysierende Proben, beispielsweise Blutproben, enthalten. Das Probenverteilungssystem weist weiter eine Transporteinrichtung mit einer Transportfläche auf, die dazu ausgebildet ist, die Probenträger zu tragen. Das Probenverteilungssystem weist weiter eine Anzahl von elektromagnetischen Aktuatoren auf, die stationär unter der Transportfläche angeordnet sind. Die elektromagnetischen Aktuatoren sind dazu ausgebildet, einen jeweiligen Probenträger durch Ausüben einer magnetischen Kraft auf der Transportfläche zu bewegen. Eine Steuerungseinrichtung ist dazu ausgebildet, die elektromagnetischen Aktuatoren derart anzusteuern, dass sich ein jeweiliger Probenträger auf der Transportfläche entlang einer vorgebbaren Bewegungsbahn bewegt. Das Probenverteilungssystem dient zum Transportieren der Probenbehälter zwischen unterschiedlichen Stationen eines Laborautomatisierungssystems, wobei eine Bewegungsbahn typisch zwischen den unterschiedlichen Stationen verläuft.

### Aufgabe und Lösung

Es ist die Aufgabe der Erfindung, ein Probenverteilungssystem und ein Laborautomatisierungssystem bereitzustellen, die einen flexiblen Transport und eine flexible Verarbeitung von Proben ermöglichen, insbesondere im Hinblick auf dynamisch veränderliche Wartezeiten bis zu einer möglichen Be- und/oder Verarbeitung der Proben in den Stationen.

Dies wird erfindungsgemäß durch ein Probenverteilungssystem nach Anspruch 1 und ein Laborautomatisierungssystem nach Anspruch 8 gelöst. Ausgestaltungen können beispielsweise den Unteransprüchen entnommen werden. Der Wortlaut sämtlicher Ansprüche wird durch ausdrückliche Inbezugnahme zum Inhalt der Beschreibung gemacht.

Die Erfindung betrifft ein Probenverteilungssystem zum Transportieren von Probenbehältern zwischen präanalytischen und/oder analytischen und/oder postanalytischen Stationen eines Laborautomatisierungssystems.

Eine präanalytische Station dient üblicherweise der Vorverarbeitung von Proben bzw. Probenbehältern.

Eine analytische Station kann beispielsweise dazu ausgebildet sein, eine Probe oder einen Teil der Probe und ein Reagenz zu verwenden, um ein messbares Signal zu erzeugen, auf Basis dessen bestimmbar ist, ob und gegebenenfalls in welcher Konzentration der Analyt vorhanden ist.

Eine postanalytische Station dient üblicherweise der Nachverarbeitung von Proben bzw. Probenbehältern.

Die präanalytischen, analytischen und postanalytischen Stationen können beispielsweise mindestens eine Station aus der Menge folgender Stationen aufweisen: eine Kappenentfernungsstation zum Entfernen von Kappen bzw. Verschlüssen auf Probenröhrchen, eine Kappenaufbringstation zum Aufbringen von Kappen bzw. Verschlüssen auf Probenröhrchen, eine Aliquotierstation zum Aliquotieren von Proben, eine Zentrifugierstation zum Zentrifugieren von Proben, eine Archivierstation zum Archivieren von Proben, eine Pipettierstation zum Pipettieren, eine Sortierstation zum Sortieren von Proben bzw. Probenröhrchen, eine Probenröhrchentypbestimmungsstation zum Bestimmen eines Typs eines Probenröhrchens und eine Probenqualitätsbestimmungsstation zum Bestimmen einer Probenqualität.

Das Probenverteilungssystem weist eine Anzahl von, insbesondere gleichartigen, Probenträgern auf, beispielsweise einige zehn bis einige hundert Probenträger. Die Probenträger sind jeweils dazu ausgebildet, einen Probenbehälter, üblicherweise in Form eines Probenröhrchens, aufzunehmen und zu fixieren.

Die Probenträger weisen jeweils mindestens ein magnetisch wirksames Element auf, beispielsweise in Form eines oder mehrerer Permanentmagnete und/oder ferromagnetischem Material.

Das Probenverteilungssystem weist weiter eine Transporteinrichtung auf. Die Transporteinrichtung weist eine ebene, horizontal ausgerichtete Transportfläche auf, die dazu ausgebildet ist, die Probenträger zu tragen. Die Transporteinrichtung weist weiter eine Anzahl von beispielsweise in Reihen und Spalten verteilten elektromagnetischen Aktuatoren auf, die stationär unter der Transportfläche angeordnet sind, wobei die elektromagnetischen Aktuatoren dazu ausgebildet sind, einen jeweiligen Probenträger, der sich auf der Transportfläche befindet, durch Ausüben einer magnetischen Kraft auf den jeweiligen Probenträger bzw. dessen magnetisch wirksames Element zweidimensional auf der Transportfläche zu bewegen. Bei den elektromagnetischen Aktuatoren kann es sich um Elektromagnete handeln.

Das Probenverteilungssystem weist weiter eine Steuerungseinrichtung auf, die dazu ausgebildet ist, die elektromagnetischen Aktuatoren derart anzusteuern, dass sich ein jeweiliger Probenträger auf der Transportfläche entlang einer frei vorgebbaren Bewegungsbahn bewegt. Bei der Steuerungseinrichtung kann es sich beispielsweise um einen Computer, einen Prozessor, eine speicherprogrammierbare Steuerung (SPS) oder um ein anderes steuerungsaufgabenausführendes System handeln. Beispielsweise kann die Steuerungseinrichtung auch Speichermittel aufweisen, in welchen Programmcode gespeichert ist, welcher das Verhalten der Steuerungseinrichtung bestimmt.

Das Probenverteilungssystem weist weiter Umgebungsbedingungsbeeinflussungsmittel auf, die dazu ausgebildet sind, mindestens eine Umgebungsbedingung mindestens eines Teilbereichs der Transportfläche bzw. über dem mindestens einen Teilbereich bzw. eines definierten Volumens über dem mindestens einen Teilbereich zu beeinflussen bzw. zu verändern, beispielsweise zu steuern oder zu regeln.

Das erfindungsgemäße Probenverteilungssystem erlaubt es, mittels der Umgebungsbedingungsbeeinflussungsmittel auf bzw. über dem Teilbereich der Transportfläche Umgebungsbedingungen zu bewirken, die eine Aufbewahrung von Proben während einer bestimmten Dauer unter kontrollierten Umgebungsbedingungen ermöglichen. Beispielsweise können die Umgebungsbedingungsbeeinflussungsmittel dazu ausgebildet sein, eine Temperatur einer Atmosphäre des Teilbereichs zu beeinflussen, beispielsweise sie zu kühlen. Somit kann über dem Teilbereich der Transportfläche eine Temperatur bewirkt werden, die unerwünschte chemische Reaktionen in den Proben unterbindet oder zumindest verlangsamt.

Die Umgebungsbedingungsbeeinflussungsmittel können dazu ausgebildet sein, die zumindest eine Umgebungsbedingung des Teilbereichs der Transportfläche lokal zu beeinflussen. Dies kann insbesondere bedeuten, dass die Umgebungsbedingungen scharf abgegrenzt nur innerhalb bzw. oberhalb des Teilbereichs beeinflusst werden, wohingegen außerhalb des Teilbereichs normale bzw. von den Umgebungsbedingungsbeeinflussungsmitteln unbeeinflusste Umgebungsbedingungen herrschen. Dies kann beispielsweise einen zum Betrieb der Umgebungsbedingungsbeeinflussungsmittel nötigen Energieverbrauch reduzieren.

Die Umgebungsbedingungsbeeinflussungsmittel können eine Anzahl von Thermoelementen zum Beeinflussen der Temperatur aufweisen, welche dem Teilbereich der Transportfläche zugeordnet sind. Beispielsweise können solche Thermoelemente unter der Transportfläche, auf der Transportfläche, über der Transportfläche oder seitlich zu dem Teilbereich angeordnet sein. Bei solchen Thermoelementen kann es sich beispielsweise um Peltier-Elemente handeln. Diese ermöglichen eine energiesparende Beeinflussung der Temperatur ohne Geräuschentwicklung. Beispielsweise ermöglichen sie eine Kühlung.

Die Umgebungsbedingungsbeeinflussungsmittel können dazu ausgebildet sein, eine Zusammensetzung einer Atmosphäre des Teilbereichs zu beeinflussen. Dies kann dazu dienen, eine besondere Gaszusammensetzung der Atmosphäre zu erreichen, durch welche schädliche Prozesse in den Proben, beispielsweise chemische Reaktionen, verhindert oder zumindest verlangsamt werden. Hierzu kann beispielsweise ein chemisch inertes Gas wie Stickstoff oder ein Edelgas zugesetzt bzw. verwendet werden.

Die Umgebungsbedingungsbeeinflussungsmittel können ein Gehäuse aufweisen, das über dem Teilbereich der Transportfläche angeordnet ist und den Teilbereich überdeckt. Damit kann eine zu beeinflussende Atmosphäre von einer sich außerhalb des Teilbereichs befindenden Atmosphäre räumlich abgegrenzt werden. Dies ermöglicht eine ressourcen- und energiesparende Konditionierung der Atmosphäre hinsichtlich der zu beeinflussenden Parameter, wie beispielsweise Temperatur oder Zusammensetzung, ohne dass eine laufende Vermischung mit einer umgebenden Atmosphäre erfolgt.

Das Gehäuse kann derart ausgebildet sein, dass es einen Luftraum bzw. ein (Luft-) Volumen über dem Teilbereich mehrseitig (nicht notwendig allseitig) umschließt. Dies ermöglicht eine besonders wirksame Abschirmung der innerhalb des Gehäuses befindlichen Atmosphäre. Eine Innenhöhe des Gehäuses über der Transportfläche kann größer als die Höhe eines Probenträgers mit einem darin aufgenommen Probenbehälter sein. Dies ermöglicht ein sicheres Einfahren der Probenträger mit entsprechenden Probenbehältern ohne die Gefahr eines Umkippens oder einer Beschädigung derselben.

Gemäß einer Ausführung bildet das Gehäuse zusammen mit dem darunter angeordneten Teilbereich der Transportfläche einen Tunnel über einer oder mehreren Zeilen und/oder Spalten von elektromagnetischen Aktuatoren. Dies ermöglicht eine einfache, beispielsweise eindimensionale, Steuerung innerhalb des Teilbereichs, wobei Probenträger an einer Stelle in den Tunnel einfahren und an einer anderen Stelle aus dem Tunnel herausfahren können. Ein benötigter Rechenaufwand der Steuerung kann damit reduziert werden. Der Tunnel kann auch mehrere Reihen und/oder Spalten von elektromagnetischen Aktuatoren überdecken.

Das Gehäuse kann eine Anzahl von Transportöffnungen aufweisen, wobei an einer jeweiligen Transportöffnung die Transportfläche eben von dem Teilbereich zum angrenzenden Teil der Transportfläche übergehen kann. Unter einem ebenen Übergang wird insbesondere ein stufenloser Übergang verstanden. Dies ermöglicht ein problemloses Einfahren und Ausfahren von Probenträgern in das Gehäuse und aus dem Gehäuse heraus. Auf spezielle Mittel, wie beispielsweise Greifer, welche einen Probenträger in das Gehäuse einbringen, kann auf diese Weise verzichtet werden.

Die Umgebungsbedingungsbeeinflussungsmittel können eine Kühleinrichtung aufweisen, die dazu ausgebildet ist, Luft innerhalb des Gehäuses zu kühlen, beispielsweise auf Temperaturen in einem Bereich zwischen 0 ° C und 10 ° C. Hierzu kann eine Kühleinrichtung innerhalb des Gehäuses vorgesehen sein und/oder es kann gekühlte Luft in das Innere des Gehäuses geleitet werden, und zwar insbesondere durch eine hierfür vorgesehene Öffnung.

Die Umgebungsbedingungsbeeinflussungsmittel können eine Luftkonditioniereinrichtung aufweisen, die dazu ausgebildet ist, eine Konzentration mindestens eines chemisch inerten Gases, insbesondere Stickstoff, innerhalb des Gehäuses zu verändern, insbesondere zu erhöhen. Insbesondere kann die Luftkonditioniereinrichtung dazu ausgebildet sein, das chemisch inerte Gas in das Innere des Gehäuses einzuleiten.

Gemäß einer Ausführung ist einer jeweiligen Transportöffnung des Gehäuses eine Anzahl von Lufteinlässen zum seitlichen Zuführen von Luft zugeordnet. Alternativ oder zusätzlich dazu kann das Gehäuse im Inneren eine Anzahl von Lufteinlässen zum Zuführen von Luft, insbesondere zum seitlichen Zuführen von Luft, aufweisen. Unter einem seitlichen Zuführen wird im Wesentlichen ein horizontales Zuführen verstanden.

Durch das Vorsehen von Lufteinlässen an jeweiligen Transportöffnungen kann eine gewisse Abschirmung der umgebenden Atmosphäre von der Atmosphäre innerhalb des Gehäuses erreicht werden. Damit kann beispielsweise Energie eingespart werden. Durch das seitliche, also beispielsweise horizontale, Zuführen von Luft kann erreicht werden, dass die Luft nicht direkt in einen Probenbehälter, welcher beispielsweise als vertikal stehendes Röhrchen ausgebildet ist, von oben eingeblasen wird. Damit kann eine übermäßige Vermischung der Probe mit der zugeführten Luft oder ein Überspritzen der typischerweise flüssigen Probe über einen Rand des Probenbehälters verhindert werden.

Das Probenverteilungssystem kann eine Anzahl von Luftauslässen zum Absaugen von Luft aus dem Inneren des Gehäuses aufweisen. Diese Luftauslässe können beispielsweise an ein geeignetes Absauggebläse angeschlossen sein. Damit kann ein Luftstrom zwischen den Lufteinlässen und den Luftauslässen erreicht werden, so dass beispielsweise zugeführte Luft nicht an den Transportöffnung des Gehäuses entweicht, sondern über die Luftauslässe wieder abgesaugt wird. Dies ermöglicht eine noch bessere Kontrolle über die Atmosphäre im Inneren des Gehäuses.

Gemäß einer Ausführung ist dem Teilbereich der Transportfläche eine Anzahl von Umgebungsbedingungssensoren zugeordnet. Damit können Umgebungsbedingungen an relevanten Stellen überwacht werden. Beispielsweise kann es sich dabei um Temperatursensoren und/oder um Sensoren zur Ermittlung einer Luftzusammensetzung handeln.

Das Laborautomatisierungssystem weist eine Anzahl (beispielsweise zwischen zwei und zwanzig) von präanalytischen und/oder analytischen und/oder postanalytischen Stationen auf, die dazu ausgebildet sind, Probenbehälter und/oder Proben, die in den Probenbehältern enthalten sind, zu bearbeiten oder zu verarbeiten. Das Bearbeiten bzw. Verarbeiten kann beispielsweise ein Lesen eines Barcodes, ein Entfernen einer Kappe auf dem Röhrchen, eine Zentrifugieren der Probe, ein Aliquotieren der Probe, ein Analysieren der Probe usw. umfassen. Das Laborautomatisierungssystem weist weiter ein oben genanntes Probenverteilungssystem zum Transportieren der Probenbehälter zwischen den präanalytischen, analytischen und postanalytischen Stationen auf.

Die Steuerungseinrichtung des Probenverteilungssystems kann dazu ausgebildet sein, eine Wartezeit zu bestimmen bzw. zu berechnen, die erforderlich ist bzw. die sich auf Basis einer Auslastung der Station ergibt, bis ein Probenbehälter und/oder eine in dem Probenbehälter enthaltene Probe mittels der Station bearbeitet werden kann. Wenn die Wartezeit mindestens so groß ist wie ein unterer zeitlicher Grenzwert, kann die Steuerungseinrichtung durch geeignete Ansteuerung der elektromagnetischen Aktuatoren den entsprechenden Probenbehälter beispielsweise in seinem Probenträger in den Teilbereich der Transportfläche bewegen.

Bei der Wartezeit kann es sich insbesondere um eine voraussichtliche, geplante und/oder theoretische Wartezeit handeln. Die Wartezeit wird im Wesentlichen durch eine Wartezeit des entsprechenden Probenbehälters und/oder der darin enthaltenen Probe auf eine Bearbeitung/Verarbeitung in der präanalytischen, analytischen und postanalytischen Station bestimmt. Die Wartezeit kann beispielsweise unter Verwendung bestimmter Formeln und/oder Tabellen berechnet oder ermittelt werden. Im einfachsten Fall lässt sich die Wartezeit aus der Länge einer Warteschlange vor einer Station ermitteln.

Bei dem unteren zeitlichen Grenzwert kann es sich beispielsweise um einen Wert in der Dimension Zeit handeln, welcher die maximale Zeit darstellt, welche eine Probe ohne Vorsehen einer speziellen Umgebungsbedingung, also beispielsweise ohne Kühlen und/oder erhöhte Stickstoffkonzentration, auf der Transportfläche verbringen kann, ohne dass eine unerwünschte Beeinflussung der chemischen Zusammensetzung der Probe über ein tolerierbares Maß hinaus zu erwarten ist. Sofern eine Probe voraussichtlich eine zu lange Zeit auf der Transportfläche verbringen wird, wird sie von der Steuerungseinrichtung in den Teilbereich der Transportfläche bewegt, in welcher aufgrund der speziellen Umgebungsbedingungen, welche dort vorherrschen, eine längere Aufenthaltsdauer möglich ist.

Der untere zeitliche Grenzwert kann beispielsweise fünf Minuten betragen.

Die Steuerungseinrichtung kann dazu ausgebildet sein, den Probenträger nur dann in den Teilbereich der Transportfläche zu bewegen, wenn die Wartezeit kleiner als ein oberer zeitlicher Grenzwert ist. Dabei kann es sich beispielsweise um einen Wert von etwa oder genau 30 Minuten handeln. Hierbei handelt es sich um einen in der Praxis häufig vorkommenden Wert, bei dem die Grenze erreicht ist, oberhalb derer auch bei einem Aufenthalt in typischen Umgebungsbedingungen eines Teilbereichs eine Lagerung der entsprechende Probe nicht mehr möglich ist, ohne chemische Veränderungen der Probe zu riskieren.

Das Laborautomatisierungssystem kann einen Kühlschrank aufweisen, wobei die Steuerungseinrichtung dazu ausgebildet ist, einen jeweiligen Probenbehälter, beispielsweise in seinem Probenträger, in den Kühlschrank zu bewegen, wenn die Wartezeit mindestens so groß ist wie der obere zeitliche Grenzwert.

In einem Kühlschrank herrschen typischerweise nochmals andere Umgebungsbedingungen als an bzw. in dem Teilbereich der Transportfläche, beispielsweise kann in dem Kühlschrank eine noch geringere Temperatur herrschen, womit chemische Reaktionen noch besser unterbunden werden können. Sofern eine schnelle Weiterverarbeitung der Probe nicht zu erwarten ist, wird deshalb die Probe bevorzugt nicht in dem Teilbereich, sondern in dem Kühlschrank gelagert, um die lange Wartezeit problemlos überbrücken zu können.

### Kurze Beschreibung der Zeichnung

Die Erfindung wird nachfolgend unter Bezugnahme auf die Zeichnungen detailliert beschrieben. Hierbei zeigen schematisch:
- Fig. 1:: ein Probenverteilungssystem in einer schematischen Draufsicht,
- Fig. 2:: das Probenverteilungssystem von Fig. 1 in einer perspektivischen Ansicht.

### Detaillierte Beschreibung

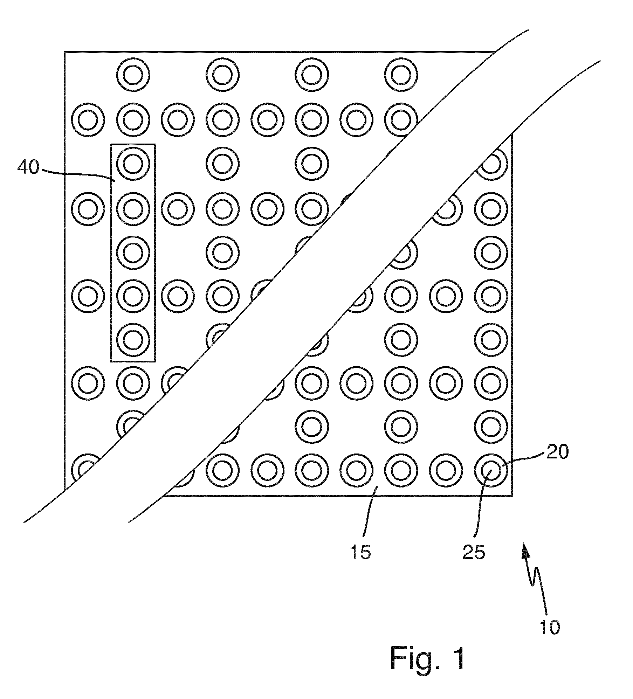

Fig. 1 zeigt schematisch Teile eines Probenverteilungssystems 10. Das Probenverteilungssystem 10 weist eine Transportfläche 15 auf, welche eine ebene Oberfläche bereitstellt. Auf der Transportfläche 15 können Probenträger mit darin jeweils enthaltenen Probenbehältern, welche in Fig. 1 nicht dargestellt sind, aufgesetzt und verfahren werden.

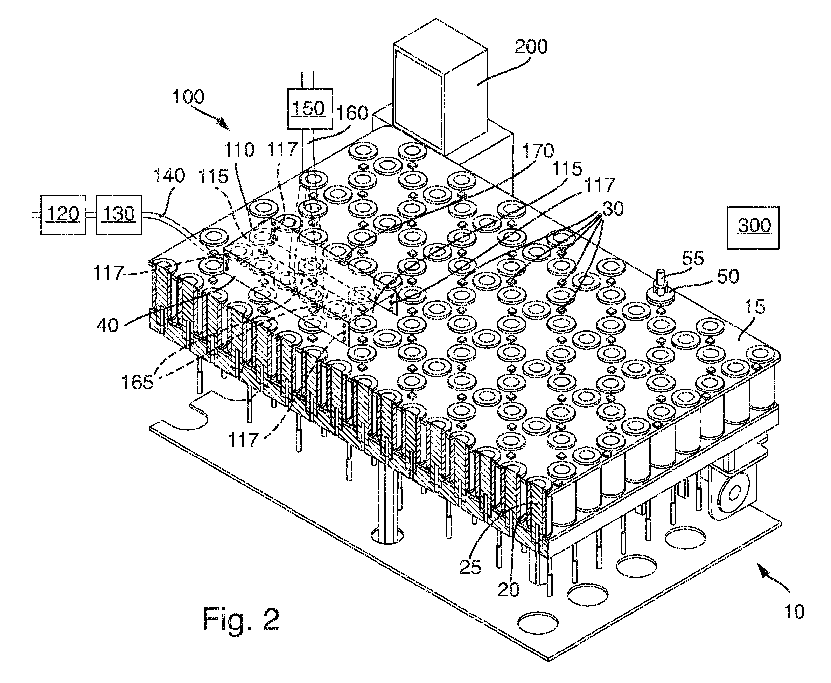

Unterhalb der Transportfläche 15 sind eine Vielzahl von elektromagnetischen Aktuatoren in Form von Spulen 20 mit jeweiligen Kernen 25 in Zeilen und Spalten angeordnet. Mittels der elektromagnetischen Aktuatoren ist es möglich, Probenträger auf der Transportfläche 15 zu bewegen. Auf der Transportfläche 15 sind eine Vielzahl von Positionssensoren 30 angeordnet (seihe Fig. 2), mit denen die Position von Probenträgern auf der Transportfläche 15 ermittelt werden kann. Zur Bildung der ebenen Oberfläche kann die dargestellte Transportfläche 15 noch eine ebene, flächige Abdeckung aufweisen.

Auf der Transportfläche 15 ist ein Teilbereich 40 ausgebildet, der sich über einem Teil einer einzelnen Spalte von elektromagnetischen Aktuatoren 20 erstreckt und dessen Umgebungsbedingungen im Vergleich zu den außerhalb des Teilbereichs 40 liegenden Umgebungsbedingungen beeinflusst werden können. Wie dies erfolgt, wird nachfolgend mit Bezug auf Fig. 2 genauer erläutert.

Fig. 2 zeigt das Probenverteilungssystem 10 von Fig. 1 in perspektivischer Ansicht und in weiterer Detailliertheit. Das Probenverteilungssystem 10 ist Bestandteil eines Laborautomatisierungssystems mit einer Anzahl von nicht näher dargestellten präanalytischen, analytischen und postanalytischen Stationen, die angrenzend an die Transportfläche 15 angeordnet sind. Das Probenverteilungssystem 10 dient zum Transportieren der Probenbehälter zwischen diesen Stationen.

Auf der Transportfläche 15 befinden sich Probenträger, wobei vorliegend aus Vereinfachungsgründen lediglich ein einzelner Probenträger 50 dargestellt ist. Der Probenträger 50 weist ein in Fig. 2 nicht zu sehendes magnetisches Element in Form eines Permanentmagneten auf. In dem Probenträger 50 ist ein Probenbehälter in Form eines (Proben-) Röhrchens 55 aufgenommen. In dem Röhrchen 55 kann eine Probe, wie beispielsweise eine Blutplasmaprobe, enthalten sein. Das Probenverteilungssystem 10 weist weiter Umgebungsbedingungsbeeinflussungsmittel 100 auf, die nachfolgend näher beschrieben werden. Mittels der Umgebungsbedingungsbeeinflussungsmittel 100 ist es möglich, Umgebungsbedingungen oberhalb des Teilbereichs 40 auf der Transportfläche 15 gezielt derart zu beeinflussen, dass oberhalb des Teilbereichs 40 Umgebungsbedingungen herrschen, die einen längeren Aufenthalt von Proben ohne die Gefahr von chemischen Veränderungen der Proben erlauben.

Die Umgebungsbedingungsbeeinflussungsmittel 100 weisen ein tunnelbildendes Gehäuse 110 auf. Das Gehäuse 110 umschließt ein Luftvolumen oberhalb des Teilbereichs 40 abgesehen von zwei Öffnungen 115 an jeweiligen Längsenden vollständig. Damit wird eine Abgrenzung des innerhalb des Gehäuses 110 befindlichen Luftvolumens gegenüber der Umgebung erreicht. Durch die Öffnungen 115 können Probenträger 50 mit darin befindlichen Probenbehältern 55 in das Gehäuse 110 hereingefahren und wieder herausgefahren werden. Insbesondere können die Probenträger 50 auch in dem Gehäuse 110 aufbewahrt bzw. geparkt werden, wobei hierfür insgesamt fünf Spulen 20 der entsprechenden Spalte zur Verfügung stehen, welche jeweilige diskrete Parkpositionen zur Aufbewahrung innerhalb des Gehäuses 110 bilden.

Angrenzend an die jeweiligen Öffnungen 115 weist das Gehäuse 110 jeweils eine Mehrzahl von Lufteinlassöffnungen 117 auf. Diese sind an jeweiligen Seitenwänden des Gehäuses 110 angeordnet und sind dazu ausgebildet, Luft seitlich, also in horizontaler Richtung, in den Innenraum des Gehäuses 110 einzublasen. Hierdurch wird ein direktes Einblasen in jeweilige Probenbehälter 55 vermieden. Durch die Anordnung benachbart zu den Öffnungen 115 wird bereits an den Öffnungen 115 eine definierte Atmosphäre hergestellt, welche durch die Luft, welche aus den Lufteinlässen 117 ausströmt, eingestellt bzw. beeinflusst werden kann.

Zur Versorgung der Lufteinlässe 117 mit entsprechend konditionierter Luft bzw. einem entsprechend konditioniertem Gasgemisch weisen die Umgebungsbedingungsbeeinflussungsmittel 100 eine Kühleinrichtung 120 sowie eine Luftkonditioniereinrichtung 130 auf. Die Kühleinrichtung 120 sowie die Luftkonditioniereinrichtung 130 sind mittels einer Leitung 140 an das Gehäuse 110 angeschlossen, so dass entsprechend gekühlte und konditionierte Luft zu den Lufteinlässen 117 strömen kann.

Die Kühleinrichtung 120 ist dazu ausgebildet, aus der Umgebung Luft anzusaugen und um etwa 5° C bis 10° C zu kühlen. Diese gekühlte Luft wird an die Luftkonditioniereinrichtung 130 geliefert. Die Luftkonditioniereinrichtung 130 ist dazu ausgebildet, der strömenden Luft Stickstoff beizumischen, so dass die Stickstoffkonzentration erhöht wird. In die Leitung 140 gelangt somit Luft, welche im Vergleich zur umgebenden Atmosphäre gekühlt ist und deren Stickstoffanteil erhöht ist. Eine entsprechende Atmosphäre stellt sich somit auch im Innenraum des Gehäuses 110 ein.

Zum Absaugen von Luft aus dem Innenraum des Gehäuses 110 weisen die Umgebungsbedingungsbeeinflussungsmittel 100 ein Sauggebläse 150 und eine daran angeschlossene Leitung 160 auf, die zu zwei Luftauslässen 165 an der Bodenfläche des Gehäuses 110 führt, wobei die Bodenfläche durch den Teilbereich 40 der Transportfläche 15 gebildet wird. Das Sauggebläse 150 zieht Luft über die Leitung 160 und die beiden Luftauslässe 165 aus dem Innenraum des Gehäuses 110 ab, so dass insgesamt eine Luftströmung von den Lufteinlässen 117 zu den Luftauslässen 165 erzeugt wird. Damit wird in besonders vorteilhafter Weise eine definierte Atmosphäre innerhalb des Gehäuses 110 unter minimaler Beeinflussung durch die umgebende Atmosphäre erreicht.

Zum Überwachen der Temperatur innerhalb des Gehäuses 110 ist in diesem ein Umgebungsbedingungssensor in Form eines Temperatursensors 170 vorgesehen. Damit kann die Kühlleistung der Kühleinrichtung 120 gesteuert bzw. geregelt werden, so dass eine gewünschte Temperatur oder Temperaturdifferenz zur Außentemperatur aufrechterhalten wird.

Angrenzend an die Transportfläche 15 weist das Probenverteilungssystem 10 ferner einen Kühlschrank 200 auf. In diesem herrscht eine noch kältere Temperatur als innerhalb des Gehäuses 110. Es ist möglich, Probenträger 50 und/oder Probenbehälter 55 in den Kühlschrank 200 zu verbringen. Hierzu können bekannte, hier nicht weiter dargestellte oder diskutierte Mittel wie beispielsweise ein Greifer verwendet werden.

Das Probenverteilungssystem 10 weist ferner eine Steuerungseinrichtung 300 auf. Die Steuerungseinrichtung 300 weist insbesondere einen Prozessor und Speichermittel auf, wobei in den Speichermitteln Programmcode gespeichert ist, bei dessen Ausführung der Prozessor ein Verfahren wie nachfolgend skizziert ausführt.

Grundsätzlich ist die Steuerungseinrichtung 300 dazu in der Lage, durch selektives Ansteuern der Spulen 20 die Probenträger 50 über die Transportfläche 15 entlang von voneinander unabhängigen Bewegungsbahnen zu bewegen.

Die Steuerungseinrichtung 300 berechnet für einen jeweiligen Probenträger 50 mit einem darin befindlichen Probenbehälter 55 und einer darin befindlichen, nicht dargestellten Probe, wie lange sich dieser voraussichtlich auf der Transportfläche 15 aufhalten wird. Hierzu kann die Steuerungseinrichtung 300 berechnen, wie lange es dauern wird, bis die entsprechende Probe in einer Station bearbeitet werden kann. Sofern diese Aufenthaltsdauer bzw. Wartezeit unterhalb von fünf Minuten liegt, belässt die Steuerungseinrichtung 300 den entsprechenden Probenträger 50 an seiner aktuellen Position an einer beliebigen Stelle auf der Transportfläche 15, jedoch außerhalb des Teilbereichs 40.

Sofern die voraussichtliche Aufenthaltszeit bzw. Wartezeit mindestens fünf Minuten, jedoch weniger als 30 Minuten beträgt, verbringt die Steuerungseinrichtung 300 den entsprechenden Probenträger 50 in das Gehäuse 110, so dass die Probe einer definierten, kühleren und mit Stickstoff angereicherten Atmosphäre ausgesetzt ist. Damit werden chemische Reaktionen innerhalb der Probe in vorteilhafter Weise verlangsamt.

Sofern die voraussichtliche Aufenthaltsdauer bzw. Wartezeit 30 Minuten oder mehr beträgt, verbringt die Steuerungseinrichtung 300 den Probenträger 50 und/oder den Probenbehälter 55 in den Kühlschrank 200. Dort ist die Temperatur derart niedrig, dass auch längere Wartezeiten überbrückt werden können.

Insgesamt kann durch die erfindungsgemäße Ausführung des Probenverteilungssystems 10 eine erheblich höhere Flexibilität erreicht werden, da Wartezeiten in geeigneter Weise überbrückt werden können, ohne dass Beeinträchtigungen der Proben zu erwarten sind. Durch das Vorsehen des tunnelbildenden Gehäuses 110 mit seiner definierten Atmosphäre kann in vielen Fällen darauf verzichtet werden, die entsprechende Probe in den Kühlschrank 200 zu verbringen. Damit kann beispielsweise der Kühlschrank 200 kleiner dimensioniert werden, was Kosten einspart. Außerdem ist ein Verbringen in den Kühlschrank 200 häufig mit Aufwand verbunden, da dieser gegenüber seiner Umgebung vollständig isoliert ist. Somit kann auch apparativer Aufwand eingespart werden und es kann Zeit eingespart werden, die sonst aufgewendet werden müsste, um den jeweiligen Probenträger 50 bzw. Probenbehälter 55 in den Kühlschrank 200 zu verbringen und aus diesem wieder herauszuholen.

## Patentansprüche

1. Probenverteilungssystem (10) zum Transportieren von Probenbehältern (55) zwischen präanalytischen, analytischen und/oder postanalytischen Stationen eines Laborautomatisierungssystems, aufweisend:
- eine Anzahl von Probenträgern (50), wobei die Probenträger (50) jeweils mindestens ein magnetisches Element aufweisen und dazu ausgebildet sind, einen Probenbehälter (55) aufzunehmen, und
- eine Transporteinrichtung, aufweisend:
- eine Transportfläche (15), die dazu ausgebildet ist, die Probenträger (50) zu tragen,
- eine Anzahl von elektromagnetischen Aktuatoren (20), die stationär unter der Transportfläche (15) angeordnet sind, wobei die elektromagnetischen Aktuatoren (20) dazu ausgebildet sind, einen jeweiligen Probenträger (50), der auf der Transportfläche (15) angeordnet ist, durch Ausüben einer magnetischen Kraft auf den jeweiligen Probenträger (50) auf der Transportfläche (15) zu bewegen, und
- eine Steuerungseinrichtung (300), die dazu ausgebildet ist, die elektromagnetischen Aktuatoren (20) derart anzusteuern, dass sich ein jeweiliger Probenträger (50) auf der Transportfläche (15) entlang einer vorgebbaren Bewegungsbahn bewegt,
**gekennzeichnet durch**
- Umgebungsbedingungsbeeinflussungsmittel (100), die dazu ausgebildet sind, zumindest eine Umgebungsbedingung eines Teilbereichs (40) der Transportfläche (15) zu beeinflussen.

2. Probenverteilungssystem (10) nach Anspruch 1, **dadurch gekennzeichnet, dass**
- die Umgebungsbedingungsbeeinflussungsmittel (100) dazu ausgebildet sind, eine Temperatur des Teilbereichs (40) zu beeinflussen.

3. Probenverteilungssystem (10) nach einem der vorhergehenden Ansprüche, **dadurch gekennzeichnet, dass**
- die Umgebungsbedingungsbeeinflussungsmittel (100) dazu ausgebildet sind, eine Zusammensetzung einer Atmosphäre des Teilbereichs (40) zu beeinflussen.

4. Probenverteilungssystem (10) nach einem der vorhergehenden Ansprüche, **dadurch gekennzeichnet, dass**
- die Umgebungsbedingungsbeeinflussungsmittel (100) ein Gehäuse (110) aufweisen, das über dem Teilbereich (40) der Transportfläche (15) angeordnet ist.

5. Probenverteilungssystem (10) nach Anspruch 4, **dadurch gekennzeichnet, dass**
- die Umgebungsbedingungsbeeinflussungsmittel (100) eine Kühleinrichtung (120) aufweisen, die dazu ausgebildet ist, das Innere des Gehäuses (110) zu kühlen.

6. Probenverteilungssystem (10) nach Anspruch 4 oder 5, **dadurch gekennzeichnet, dass**
- die Umgebungsbedingungsbeeinflussungsmittel (100) eine Luftkonditioniereinrichtung (130) aufweisen, die dazu ausgebildet ist, eine Konzentration mindestens eines chemisch inerten Gases innerhalb des Gehäuses (110) zu erhöhen.

7. Probenverteilungssystem (10) nach einem der vorhergehenden Ansprüche, **dadurch gekennzeichnet, dass**
- dem Teilbereich (40) der Transportfläche (15) eine Anzahl von Umgebungsbedingungssensoren (170) zugeordnet sind.

8. Laborautomatisierungssystem, aufweisend:
- eine Anzahl von präanalytischen, analytischen und/oder postanalytischen Stationen, die dazu ausgebildet sind, Probenbehälter (55) und/oder Proben, die in den Probenbehältern (55) enthalten sind, zu bearbeiten, und
- ein Probenverteilungssystem (10) zum Transportieren der Probenbehälter (55) zwischen den präanalytischen, analytischen und/oder postanalytischen Stationen nach einem der vorhergehenden Ansprüche.

9. Laborautomatisierungssystem nach Anspruch 8, **dadurch gekennzeichnet, dass**
- die Steuerungseinrichtung (300) des Probenverteilungssystems (10) dazu ausgebildet ist, eine Wartezeit zu bestimmen, bis ein jeweiliger Probenbehälter (55) und/oder eine in dem jeweiligen Probenbehälter (55) enthaltene Probe mittels einer Station bearbeitbar ist, und einen jeweiligen Probenbehälter (55), insbesondere in seinem Probenträger (50), in den Teilbereich (40) der Transportfläche (15) zu bewegen, wenn die Wartezeit mindestens so groß ist wie ein unterer zeitlicher Grenzwert.

10. Laborautomatisierungssystem nach Anspruch 9, **gekennzeichnet durch**
- einen Kühlschrank (200), wobei die Steuerungseinrichtung (300) dazu ausgebildet ist, einen jeweiligen Probenbehälter (55) in den Kühlschrank (200) zu bewegen, wenn die Wartezeit mindestens so groß ist wie ein oberer zeitlicher Grenzwert.
